# EUROPÄISCHE PATENTSCHRIFT

(11) **EP 2 359 978 B1**
(45) Veröffentlichungstag und Bekanntmachung des Hinweises auf die Patenterteilung: **24.08.2016**
(21) Anmeldenummer: 11150057.5
(22) Anmeldetag: 04.01.2011
(51) Int. Cl.: B23K 26/073, B23K 26/03, B23K 26/06, G01J 1/42

(54) **Messeinrichtung für eine Laserstrahlbearbeitungsvorrichtung**
Measuring device for a laser beam processing device
Dispositif de mesure pour un dispositif de traitement au laser

(30) Priorität: 23.02.2010 DE 102010002260
(43) Veröffentlichungstag der Anmeldung: 24.08.2011
(73) Patentinhaber: Robert Bosch GmbH, 70442 Stuttgart (DE)
(72) Erfinder: Ohmle, Thomas, 89081 Ulm (DE); Reber, Gerhard, 71549 Auenwald (DE); Ramsayer, Reiner, 71701 Schwieberdingen (DE)

(56) Entgegenhaltungen:
- EP-A2- 0 421 135
- DE-A1-102007 035 715
- US-A- 5 008 510

## Beschreibung

### Stand der Technik

Die Erfindung betrifft eine Messeinrichtung für eine Laserstrahlbearbeitungsvorrichtung nach dem Oberbegriff des Anspruchs 1. Eine derartige Messeinrichtung ist aus der DE 10 2007 035 715 A1 bekannt. Bei der bekannten Messeinrichtung ist im Strahlengang des Laserstrahls ein Spiegelelement angeordnet, das die von einem Bearbeitungs- bzw. Fügebereich zweier Bauteile zurückreflektierte Laserstrahlung über optische Elemente einem Sensor bzw. einer Sensoreinheit zuführt. Nähere Angaben bezüglich der Verwendung der Sensoreinheiten sind der genannten Schrift nicht entnehmbar. Wesentlich ist hierbei jedoch, dass eine aus einer Fügezone zweier Bauteile zurückreflektierte Laserstrahlung erfasst wird, welche zuvor zweimal durch optische Elemente geleitet wurde, die zur Ausbildung eines ringförmigen Laserstrahls dienen. Daher ist es unter Umständen äußerst schwierig, mittels der bekannten Messeinrichtung auf die Leistung des Laserstrahls im Bereich der Fügezone der Bauteile zu schließen.

### Offenbarung der Erfindung

Ausgehend von dem dargestellten Stand der Technik liegt der Erfindung die Aufgabe zugrunde, eine Messeinrichtung für eine Laserstrahlbearbeitungsvorrichtung nach dem Oberbegriff des Anspruchs 1 derart weiterzubilden, dass auf einfache Art und Weise eine möglichst genaue Erfassung der ringförmigen Laserstrahlung im Bereich zumindest nahe des Bearbeitungsbereichs des wenigstens einen Bauteils ermöglicht wird. Diese Aufgabe wird mit einer Messeinrichtung für eine Laserstrahlbearbeitungsvorrichtung mit den Merkmalen des Anspruchs 1 gelöst. Der Erfindung liegt dabei die Idee zugrunde, durch eine Anordnung des optischen Elements im Strahlengang des Laserstrahls im Bearbeitungsbereich die Laserstrahlung unmittelbar an ihrem Wirkungsbereich zu erfassen bzw. von dort an einen Sensor umzulenken. Dadurch wird eine einfache Anwendung der Messeinrichtung ermöglicht, ohne dass eine an die jeweilige Laserstrahlbearbeitungsvorrichtung erforderliche Adaption des optischen Elementes oder des Sensors erforderlich ist.

Vorteilhafte Weiterbildungen der erfindungsgemäßen Messeinrichtung für eine Laserstrahlbearbeitungsvorrichtung sind in den Unteransprüchen angegeben. In den Rahmen der Erfindung fallen sämtliche Kombinationen aus zumindest zwei von in den Ansprüchen, der Beschreibung und/oder den Figuren offenbarten Merkmalen.

Insbesondere kann es vorgesehen sein, dass der Sensor ein Sensor zur Erfassung der Leistung des ringförmigen Laserstrahls ist. Hierbei wird durch die spezielle Anordnung insbesondere keine bzw. nur eine bekannte oder einfach zu ermittelnde Abschwächung des Laserstrahls durch optische Elemente bewirkt, welche sich nach der Ausbildung des ringförmigen Laserstrahls im Strahlengang des Laserstrahls befinden.

Um eine möglichst genaue Erfassung des ringförmigen Laserstrahls, insbesondere zur Leistungsmessung, zu erzielen, bei der keine Bereiche des ringförmigen Laserstrahls unerfasst bleiben und zusätzlich das optische Element relativ einfach und genau fertigen zu können, ist es in einer weiteren Ausgestaltung der Erfindung vorgesehen, dass die Reflexionsfläche kegelartig ausgebildet ist, dass das optische Element eine Längsachse aufweist und, dass die Längsachse senkrecht zur Strahlenebene des ringförmigen Laserstrahls ausgerichtet ist.

Um den Strahlengang des ringförmigen Laserstrahls innerhalb der Messeinrichtung möglichst wenig zu beeinflussen, ist es darüber hinaus vorgesehen, dass das optische Element einen, insbesondere zylindrisch ausgebildeten, Glaskörper aufweist. Ein derartiger Glaskörper ist für die Laserstrahlung durchlässig und verursacht nur einen sehr geringen Leistungsverlust der Laserstrahlung.

Um bei einem Glaskörper oder einem Reflexionselement die benötigte Reflexionsfläche möglichst einfach und genau herstellen zu können, ist es in einer weiteren konstruktiven Ausgestaltung der Erfindung vorgesehen, dass die Reflexionsfläche als dünne Schicht oder als Beschichtung an einer Grenzfläche des Glaskörpers oder des Reflexionselements ausgebildet ist. Somit lässt sich durch die Geometrie der Grenzfläche sehr einfach der Eintritts- und Austrittswinkel der ringförmigen Laserstrahlung beeinflussen, während durch die Reflexionsfläche lediglich die eigentliche Reflexion des Laserstrahls bewirkt wird.

Bei der Verwendung eines Glaskörpers als Bestandteil des optischen Elementes kann es vorkommen, dass je nach Fokussierung des ringförmigen Laserstrahls der Fokus bzw. die Fokusebene innerhalb des Glaskörpers liegt, was zu hohen lokalen Intensitäten der Laserstrahlung und damit zu einer Zerstörung oder Beschädigung des Glaskörpers, oder zu einer Verfälschung der Messung aufgrund von Erwärmung führen kann. Daher wird in einer weiteren vorteilhaften Weiterbildung der Erfindung vorgeschlagen, dass der Glaskörper in seinem Eintrittsbereich für den ringförmigen Laserstrahl eine gekrümmt ausgebildete Eintrittsfläche aufweist. Dadurch wird bewirkt, dass der Fokus bzw. die Fokusebene des ringförmigen Laserstrahls außerhalb des gefährdeten Bereichs im Glaskörper liegt.

Alternativ oder zusätzlich hierzu kann es auch vorgesehen sein, dass die Reflexionsfläche des Glaskörpers gekrümmt ausgebildet ist. Auch dadurch wird bewirkt, dass der Fokus bzw. die Fokusebene des ringförmigen Laserstrahls außerhalb des Glaskörpers angeordnet wird.

Um eine einfache Ausrichtung des Sensors zum optischen Element zu ermöglichen, ist es weiterhin vorteilhaft, wenn das optische Element mit einem Verbindungselement unmittelbar mit dem Sensor verbunden ist. Dadurch wird mit geringem Aufwand eine exakte Ausrichtung zwischen optischem Element und Sensor bewirkt.

Um zu vermeiden, dass der Laserstrahl durch eine relativ dicke Schicht des Glaskörpers geleitet wird, was ggf. mit Leistungsverlusten des Laserstrahls bzw. zu einer unerwünschten Ablenkung des Laserstrahls im Glaskörper führt, wird in einer weiteren Ausgestaltung der Erfindung vorgeschlagen, dass der Glaskörper als Hohlkörper ausgebildet ist und, dass die Reflexionsfläche an einem Reflexionselement ausgebildet ist, wobei die Reflexionsfläche beabstandet zur Wand des Glaskörpers angeordnet ist, durch die der ringförmige Laserstrahl auf die Reflexionsfläche geleitet wird.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine vereinfachte, schematische Darstellung eines Teils einer Laserstrahlbearbeitungsvorrichtung zur Erzeugung eines ringförmigen Laserstrahls im Bereich eines Werkstückes,
- Fig. 2: eine erste erfindungsgemäße Messeinrichtung zur Leistungsmessung des ringförmigen Laserstrahls gemäß Fig. 1 in einer vereinfachten Darstellung,
- Fig. 3 und Fig. 4: Teilschnitte durch modifizierte Messeinrichtungen gemäß Fig. 2 zur Vermeidung von Erwärmungen eines Glaskörpers,
- Fig. 5: eine gegenüber Fig. 2 modifizierte Messeinrichtung in einer vereinfachten Darstellung,
- Fig. 6: eine nochmals modifizierte Messeinrichtung in vereinfachter Darstellung, bei der das optische Element unmittelbar mit einem Leistungsmesskopf gekoppelt ist und
- Fig. 7: eine weitere modifizierte Messeinrichtung unter Verwendung einer Ulbrichtkugel in vereinfachter Darstellung.

Gleiche Bauteile bzw. Bauteile mit gleicher Funktion sind in den Figuren mit den gleichen Bezugsziffern versehen.

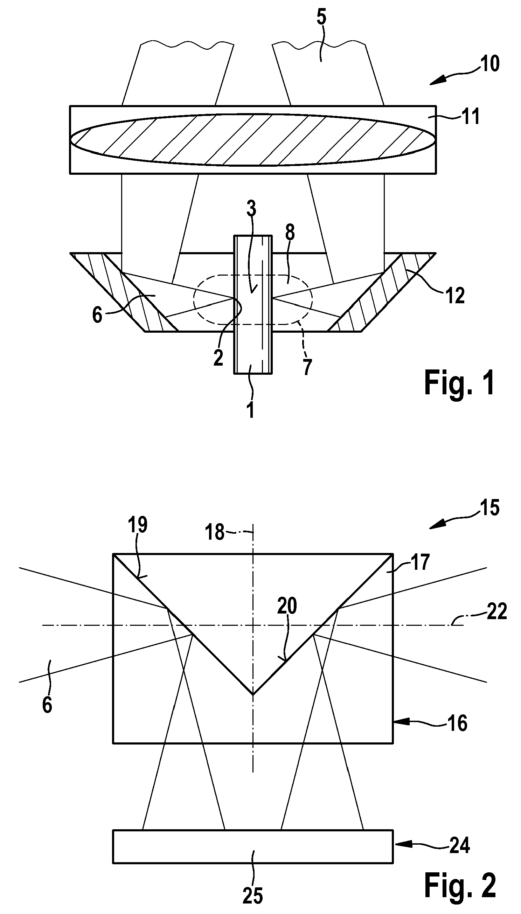

In der Fig. 1 ist ein Teil einer Laserstrahlbearbeitungsvorrichtung 10 dargestellt. Mittels der Laserstrahlbearbeitungsvorrichtung 10 wird wenigstens ein Bauteil 1, insbesondere wenigstens ein zylindrisch ausgebildetes Bauteil 1, in einem ringförmigen Bereich 2 seiner Außenfläche 3 bearbeitet. Die Bearbeitung ist dabei insbesondere dazu vorgesehen, zwei Bestandteile des Bauteils 1 miteinander zu verbinden bzw. zu verschweißen.

Die Laserstrahlbearbeitungsvorrichtung 10 weist eine nicht dargestellte Laserstrahlquelle auf, mittels der ein Laserstrahl 5 erzeugt wird, der mittels einer Fokussieroptik 11 und eines kegelförmigen Spiegels 12 zu einem ringförmigen Laserstrahl 6 umgeformt wird, der innerhalb eines durch die gestrichelte Linie 7 gekennzeichneten Bereichs 8 zur Erwärmung des Bauteils 1 dient. Hierbei ist es wesentlich bzw. erforderlich zu wissen, wie hoch die Leistung bzw. Energiedichte des ringförmigen Laserstrahls 6 in dem Bereich 8 ist, um damit ggf. die Laserstrahlquelle oder die Fokussieroptik 11 verstellen bzw. regeln zu können.

In der Fig. 2 ist eine erste Messeinrichtung 15 dargestellt, die in den Strahlengang des ringförmigen Laserstrahls 6 in dem Bereich 8 der Laserstrahlbearbeitungsvorrichtung 10 angeordnet wird. Hierbei weist die Messeinrichtung 15 ein optisches Element 16 in Form eines zylindrischen Glaszylinders 17 auf, der eine Längsachse 18 aufweist, in der eine kegelartige bzw. kegelförmige Grenzfläche 19 ausgebildet ist. Die Grenzfläche 19 kann hierbei beispielsweise durch eine mechanische Bearbeitung des Glaszylinders 17 erfolgen. In der Grenzfläche 19 ist eine Reflektionsfläche 20 angeordnet. Die als Verspiegelung ausgebildete Reflektionsfläche 20 kann dabei beispielsweise durch eine Beschichtung mit einem entsprechenden Element oder aber durch das Aufbringen einer zusätzlichen, separaten Schicht auf die Grenzfläche 19 erfolgen.

Ferner erkennt man, dass die Grenzfläche 19 mit der Laserstrahlebene 22 des ringförmigen Laserstrahls 6 derart ausgerichtet ist, dass die Längsachse 18 des Glaszylinders 17 senkrecht zur Laserstrahlebene 22 angeordnet ist.

Beabstandet zur Messeinrichtung 15 ist auf der der (nicht dargestellten) Fokussieroptik 11 gegenüberliegenden Seite des Glaszylinders 17 ein Sensor 24 in Form eines Leistungsmesskopfes 25 angeordnet. Die Funktionsweise der Messeinrichtung 15 ist derart, dass die an der Grenzfläche 19 auftreffende ringförmige Laserstrahlung 6 von der Reflektionsfläche 20 entsprechend den Brechungsgesetzen reflektiert bzw. umgeleitet wird und nach dem Austritt aus dem Glaszylinder 17 auf den Leistungsmesskopf 25 auftrifft. Mittels des Leistungsmesskopfes 25 kann somit auf die Leistung bzw. die Leistungsdichte des ringförmigen Laserstrahls 6 im Bereich 8 geschlossen werden, wenn die optischen Eigenschaften bzw. die Verluste durch die Reflexion des Glaszylinders 15 bzw. des optischen Elements 16 bekannt sind. Diese Verluste sind üblicherweise mittels eines zuvor stattgefundenen Kalibriervorganges bekannt bzw. ermittelt worden.

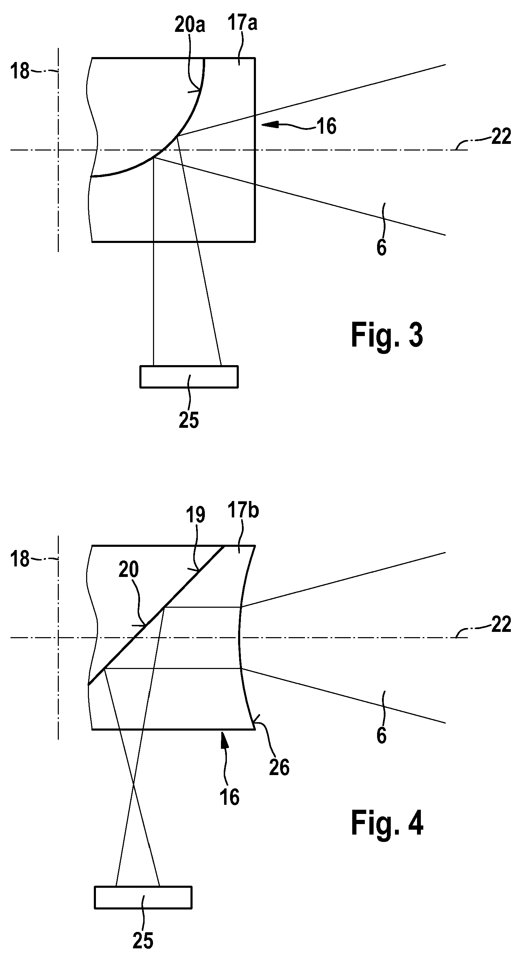

In der Fig. 3 ist ein modifizierter Glaszylinder 17a dargestellt, dessen Reflexionsfläche 20a gekrümmt ausgebildet ist. Durch die gekrümmte Ausbildung der Reflexionsfläche 20a wird der Fokus bzw. die Fokussierebene des ringförmigen Laserstrahls 6 außerhalb des Glaszylinders 17a verlegt, so dass eine (unerwünschte) Erwärmung des Glaszylinders 17a vermieden wird, die ansonsten zu einer Verfälschung der Messergebnisse führen könnte.

In der Fig. 4 ist ein gegenüber der Fig. 2 nochmals modifizierter Glaszylinder 17b dargestellt. Der Glaszylinder 17b besitzt eine gekrümmt ausgebildete Eintrittsfläche 26 für den ringförmigen Laserstrahl 6 in den Glaszylinder 17b. Seine Grenzfläche 19 ist jedoch entsprechend der Grenzfläche 19 beim Glaszylinder 17 kegelförmig bzw. mit einer ebenen Kegelwand vorgesehen. Auch durch eine derartige Ausbildung der Eintrittsfläche 26 am Glaszylinder 17b lässt sich der Fokus bzw. die Fokusebene des ringförmigen Laserstrahls 6 auf einen Bereich lenken, der keine Erwärmung des Glaszylinders 17b bewirkt.

Ergänzend wird erwähnt, dass die Maßnahmen entsprechend der Fig. 3 und 4 auch in Kombination angewandt werden können.

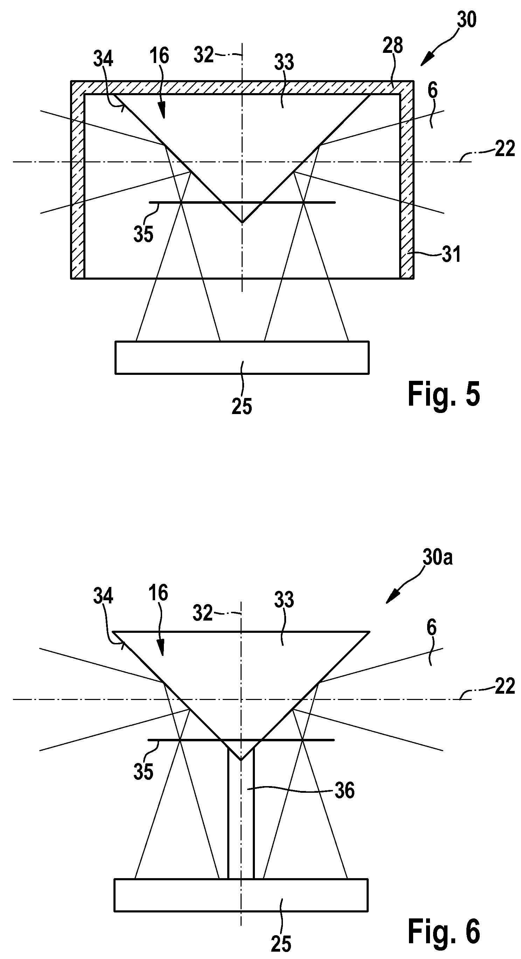

In der Fig. 5 ist ein becherartiger Glaszylinder 28 als Teil einer Messeinrichtung 30 dargestellt. Der Glaszylinder 28 weist eine relativ dünne, ringförmig ausgebildete Wand 31 auf, durch die die ringförmige Laserstrahlung 6 hindurchtritt. Konzentrisch zu einer Längsachse 32 des Glaszylinders 28 ist innerhalb des Glaszylinders 28 ein Reflexionselement 33 angeordnet. Das Reflexionselement 33 weist eine kegelförmig ausgebildete Reflexionsfläche 34 auf, die analog zur Reflexionsfläche 20 bzw. 20a ausgebildet bzw. angeordnet ist. Wesentlich bei der Messeinrichtung 30 ist, dass die mittels des Reflexionselementes 33 reflektierte ringförmige Laserstrahlung 6 nach ihrer Reflexion nicht mehr durch Glas geleitet bzw. geführt ist. Ferner erkennt man, dass die reflektierte Laserstrahlung eine Fokussierebene 35 aufweist, die außerhalb des Reflexionselementes 33 liegt und somit nicht zu einer Erwärmung des Reflexionselementes 33 beitragen kann.

In der Fig. 6 ist eine gegenüber der Fig. 5 modifizierte Messeinrichtung 30a dargestellt. Bei dieser Messeinrichtung 30a ist der Glaszylinder 28 im Wesentlichen durch ein Verbindungselement 36 ersetzt, das beispielsweise als zylindrischer Körper ausgebildet ist. Das Verbindungselement 36 ist hierbei fest mit der Unterseite des Reflexionselementes 33 und der Oberseite des Leistungsmesskopfes 25 verbunden. Auch bei der Messeinrichtung 30a liegt die Fokusebene 35 des reflektierten ringförmigen Laserstrahls 6 außerhalb des Reflexionselementes 33.

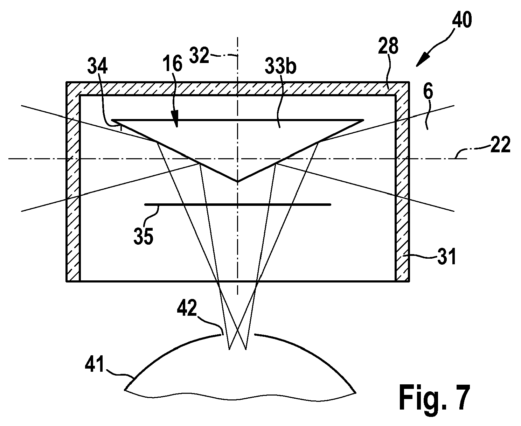

In der Fig. 7 ist eine weitere Messeinrichtung 40 dargestellt. Die Messeinrichtung 40 entspricht im Wesentlichen der Messeinrichtung 30 gemäß der Fig. 5. Wesentlich hierbei ist jedoch, dass anstelle eines Leistungsmesskopfes 25 eine UIbrichtkugel 41 verwendet wird. Ferner weist das Reflexionselement 33b eine modifizierte Form bzw. Gestalt auf, um die vom Reflexionselement 33b reflektierte Laserstrahlung auf eine Öffnung 42 in der Ulbrichtkugel 41 zu richten bzw. zu fokussieren.

Ergänzend wird erwähnt, dass anstelle eines Leistungsmesskopfes 25 bzw. einer Ulbrichtkugel 41 auch andersartige Elemente bzw. Einrichtungen, z.B. Kameras, verwendet werden können, die geeignet sind, eine Leistung bzw. Leistungsdichte einer Laserstrahlung, insbesondere eines ringförmigen Laserstrahls 6, zu ermitteln. Dabei können ggf. noch zusätzliche Auswerteeinrichtungen erforderlich sein, um zum Besipiel bei Verwendung einer Kamera eine Leistungsdichteverteilung zu ermitteln. Weiterhin können die Eintritts- und Austrttsflächen für den Laserstrahl 6 bei den Glaszylindern 17, 17a, 17b und 28 grundsätzlich auch konvex, konkav oder als Kombination davon ausgebildet sein können.

Weiterhin wird erwähnt, dass die soweit beschriebenen Messeinrichtungen 15, 30, 30a und 40 in vielfältiger Art und Weise modifiziert bzw. abgewandelt werden können, ohne vom Erfindungsgedanken abzuweichen. Dieser besteht darin, in dem Bereich des ringförmigen Laserstrahls 6, in dem während der Bearbeitung eines Bauteils 1 die Laserstrahlung auf das Bauteil 1 trifft, eine Leistungsvermessung vorzunehmen, indem ein geeignetes optisches Element in den Strahlengang eingeführt wird, das den ringförmigen Laserstrahl 6 umlenkt und einer Einrichtung zur Messung der Leistung bzw. Leistungsdichte des Laserstrahls 6 zuführt.

## Patentansprüche

1. Messeinrichtung (15; 30; 30a; 40) für eine Laserstrahlbearbeitungsvorrichtung (10), wobei mittels der Laserstrahlbearbeitungsvorrichtung (10) ein ringförmiger Laserstahl (6) zur Bearbeitung wenigstens eines Bauteils (1) in einem Bearbeitungsbereich (8) erzeugt wird und mit wenigstens einem optischen Element (16), das in dem Strahlengang des Laserstrahls (5, 6) angeordnet ist und den Laserstrahl (5, 6) zu einem Sensor (24) umlenkt, **dadurch gekennzeichnet, dass** das optische Element (16) im Bearbeitungsbereich (8) des wenigstens einen Bauteils angeordnet ist und, dass das optische Element (16) eine Reflexionsfläche (20; 20a; 34) aufweist, die den ringförmigen Laserstrahl (6) auf den Sensor (24) umlenkt,
wobei die Reflexionsfläche (20; 20a; 34) kegelartig ausgebildet ist und, dass das optische Element (16) eine Längsachse (18; 32) aufweist, wobei die Längsachse (18; 32) senkrecht zur Strahlenebene (22) des ringförmigen Laserstrahls (6) ausgerichtet ist.

2. Messeinrichtung nach Anspruch 1,
**dadurch gekennzeichnet,**
**dass** der Sensor (24) ein Sensor oder eine Einrichtung zur Erfassung der Leistung oder einer Lesistungsdichteverteilung des ringförmigen Laserstrahls (6) ist.

3. Messeinrichtung nach einem der Ansprüche 1 oder 2,
**dadurch gekennzeichnet,**
**dass** das optische Element (16) wenigstens einen, insbesondere zylindrisch ausgebildeten Glaskörper (17; 17a; 17b; 31) oder ein Reflexionselement (33; 33b) aufweist.

4. Messeinrichtung nach Anspruch 3,
**dadurch gekennzeichnet,**
**dass** die Reflexionsfläche (20; 20a; 34) als dünne Schicht oder als Beschichtung an einer Grenzfläche (19) des Glaskörpers (17; 17a; 17b) oder des Reflexions-elements (33; 33b) ausgebildet ist.

5. Messeinrichtung nach Anspruch 3 oder 4,
**dadurch gekennzeichnet,**
**dass** der Glaskörper (17b) in seinem Eintrittsbereich für den ringförmigen Laser-strahl (6) eine gekrümmt ausgebildete Eintrittsfläche (26) aufweist.

6. Messeinrichtung nach einem der Ansprüche 1 bis 5,
**dadurch gekennzeichnet,**
**dass** die Reflexionsfläche (20a) des Glaskörpers (17a) gekrümmt ausgebildet ist.

7. Messeinrichtung nach einem der Ansprüche 1 bis 6,
**dadurch gekennzeichnet,**
**dass** das optische Element (16) mit einem Verbindungselement (32) unmittelbar mit dem Sensor (24) verbunden ist.

8. Messeinrichtung nach Anspruch 3 oder 4,
**dadurch gekennzeichnet,**
**dass** der Glaskörper (31) als Hohlkörper ausgebildet ist und, dass die Reflexionsfläche (34) an einem Reflexionselement (33; 33b) ausgebildet ist, wobei die Reflexionsfläche (34) beabstandet zur Wand (31) des Glaskörpers (31) angeordnet ist, durch die der ringförmige Laserstrahl (6) auf die Reflexionsfläche (34) geleitet wird.

9. Messeinrichtung nach einem der Ansprüche 2 bis 8,
**dadurch gekennzeichnet,**
**dass** der Sensor (24) zur Erfassung der Leistung als Leistungsmesskopf (25), Ulbrichtkugel (41) oder Kamera ausgebildet ist.

## Claims

1. Measuring device (15; 30; 30a; 40) for a laser beam processing apparatus (10), wherein a ring-shaped laser beam (6) for processing at least one component (1) is generated in a processing region (8) by means of the laser beam processing apparatus (10) and with at least one optical element (16), which is arranged in the beam path of the laser beam (5, 6) and deflects the laser beam (5, 6) to a sensor (24), **characterized in that** the optical element (16) is arranged in the processing region (8) of the at least one component and **in that** the optical element (16) has a reflection surface (20; 20a; 34) which deflects the ring-shaped laser beam (6) onto the sensor (24), the reflection surface (20; 20a; 34) having a cone-like embodiment, and **in that** the optical element (16) has a longitudinal axis (18; 32), the longitudinal axis (18; 32) being aligned perpendicular to the beam plane (22) of the ring-shaped laser beam (6).

2. Measuring device according to Claim 1,
**characterized**
**in that** the sensor (24) is a sensor or a device for detecting the power or a power density distribution of the ring-shaped laser beam (6).

3. Measuring device according to either of Claims 1 and 2,
**characterized**
**in that** the optical element (16) has at least one glass body (17; 17a; 17b; 31), in particular with a cylindrical embodiment, or a reflection element (33; 33b).

4. Measuring device according to Claim 3,
**characterized**
**in that** the reflection surface (20; 20a; 34) is embodied as a thin layer or as a coating at an interface (19) of the glass body (17; 17a; 17b) or of the reflection element (33; 33b).

5. Measuring device according to Claim 3 or 4,
**characterized**
**in that** the glass body (17b) has an entry surface (26) with a curved embodiment in the entrance region thereof for the ring-shaped laser beam (6).

6. Measuring device according to one of Claims 1 to 5,
**characterized**
**in that** the reflection surface (20a) of the glass body (17a) has a curved embodiment.

7. Measuring device according to one of Claims 1 to 6,
**characterized**
**in that** the optical element (16) is connected directly to the sensor (24) with a connection element (32).

8. Measuring device according to Claim 3 or 4,
**characterized**
**in that** the glass body (31) is embodied as a hollow body and in that the reflection surface (34) is embodied on a reflection element (33; 33b), the reflection surface (34) being arranged at a distance from the wall (31) of the glass body (31) through which the ring-shaped laser beam (6) is guided onto the reflection surface (34).

9. Measuring device according to one of Claims 2 to 8,
**characterized**
**in that** the sensor (24) for detecting the power is embodied as a power probe (25), Ulbricht sphere (41) or camera.

## Revendications

1. Dispositif de mesure (15 ; 30 ; 30a ; 40) pour un dispositif de traitement au rayon laser (10), dans lequel, grâce au dispositif de traitement au rayon laser (10), on génère un rayon laser annulaire (6) pour le traitement d'au moins un composant (1) dans une zone de traitement (8) et avec au moins un élément optique (16), lequel est disposé dans la trajectoire de rayon du rayon laser (5, 6) et dévie le rayon laser (5, 6) vers un capteur (24),
**caractérisé en ce que** l'élément optique (16) est disposé dans la zone de traitement (8) de l'au moins un composant et **en ce que** l'élément optique (16) présente une surface de réflexion (20 ; 20a ; 34) qui dévie le rayon laser annulaire (6) vers le capteur (24), dans lequel la surface de réflexion (20 ; 20a ; 34) est réalisée de manière conique, et **en ce que** l'élément optique (16) présente un axe longitudinal (18 ; 32), dans lequel l'axe longitudinal (18 ; 32) est orienté perpendiculairement au plan de rayon (22) du rayon laser annulaire (6).

2. Dispositif de mesure selon la revendication 1,
**caractérisé en ce que**
le capteur (24) est un capteur ou un dispositif pour la détection de la puissance ou d'une répartition de densité de puissance du rayon laser annulaire (6).

3. Dispositif de mesure selon l'une des revendications 1 ou 2,
**caractérisé en ce que**
l'élément optique (16) présente au moins un corps en verre (17 ; 17a ; 17b ; 31), en particulier réalisé de manière cylindrique, ou un élément de réflexion (33 ; 33b).

4. Dispositif de mesure selon la revendication 3,
**caractérisé en ce que**
la surface de réflexion (20 ; 20a ; 34) est réalisée en tant que couche mince ou en tant que revêtement au niveau d'une surface limitrophe (19) du corps en verre (17 ; 17a ; 17b) ou de l'élément de réflexion (33 ; 33b).

5. Dispositif de mesure selon la revendication 3 ou 4,
**caractérisé en ce que**
le corps en verre (17b) présente, dans sa zone d'entrée pour le rayon laser annulaire (6), une surface d'entrée (26) réalisée de manière courbe.

6. Dispositif de mesure selon l'une des revendications 1 à 5,
**caractérisé en ce que**
la surface de réflexion (20a) du corps en verre (17a) est réalisée de manière courbe.

7. Dispositif de mesure selon l'une des revendications 1 à 6,
**caractérisé en ce que**
l'élément optique (16) est directement relié au capteur (24) avec un élément de liaison (32).

8. Dispositif de mesure selon la revendication 3 ou 4,
**caractérisé en ce que**
le corps en verre (31) est réalisé en tant que corps creux et **en ce que** la surface de réflexion (34) est réalisée au niveau d'un élément de réflexion (33 ; 33b), dans lequel la surface de réflexion (34) est disposée de manière espacée par rapport à la paroi (31) du corps en verre (31) à travers laquelle le rayon laser annulaire (6) est guidé vers la surface de réflexion (34).

9. Dispositif de mesure selon l'une des revendications 2 à 8,
**caractérisé en ce que**,
pour la détection de la puissance, le capteur (24) est réalisé en tant que tête de mesure de puissance (25), sphère d'intégration (41) ou caméra.
